# EUROPEAN PATENT APPLICATION

(11) **EP 3 035 626 A1**
(43) Date of publication of application: **22.06.2016**
(21) Application number: 14199191.9
(22) Date of filing: 19.12.2014
(51) Int. Cl.: H04L 29/06, H04L 12/24, H04L 29/08

(54) **Establishment of a system connection, a server and a system thereto**

(71) Applicant: TeliaSonera AB, 10663 Stockholm (SE)
(72) Inventor: Simonen, Vesa-Pekka, 04390 JÄNIKSENLINNA (FI)
(74) Representative: Berggren Oy Ab

(57) **Abstract**

The invention relates to a method for providing a system connection for a client device to at least one system among a plurality of systems. The connection is established over a session implemented in a server in which session a system related application is executed and a connection type is retrieved from a data storage over which the connection is established. The invention relates also to a server and a system implementing the method.

## Description

### TECHNICAL FIELD

The invention concerns in general the technical field of network management. Especially the invention concerns an establishment of remote connection to a system.

### BACKGROUND

System and service management is a demanding task for parties, such as IT personnel of a company, involved in it. One reason is that the systems are typically system vendor specific which means that accessing methods to the systems differ from each other. Furthermore, there is need to install separate clients in the devices of persons being involved in the system management which, in turn, requires additional maintenance of the devices used in system management.

A solution disclosed in a document WO 2006/100349 A1 tries to tackle the above mentioned challenges. The solution in the document discloses a centralized management solution for a set of network nodes, which takes a different approach than the above described solutions. According to the centralized management solution a centralized entity is configured to implement at least one management interface for a set of network nodes. A person may thus manage the network nodes through an interface implemented in a centralized management server. Even though the centralized management entity provides an advantage of managing the set of network nodes centrally, it provides only an interface for the management without taking into account specific characteristics with respect to a system to be management.

However, it is necessary to improve the existing solutions developed for a system management especially so that the operator may manage and control systems in an easy way without installing any specific application in his/her computer device, but also so that the management solution takes into account any peculiarities of a system to be managed.

### SUMMARY

An objective of the invention is to present a method, a server and a system for providing a system connection. Another objective of the invention is that the method, the server and the system for providing a system connection at least mitigates a need for pre-configuration of client devices used in system management.

The objectives of the invention are reached by a method, a server and a system as defined by the respective independent claims.

According to a first aspect, a method for providing a system connection for a client device to at least one system among a plurality of systems in a computer network is provided, wherein the method comprising: a) receiving access credentials from the client device in order to establish a session in a service; b) establishing the session in the service at least by assigning a virtual network address for the session in response to a legitimate access credentials; c) receiving an indication from the client device into which system the client device intends to access; d) retrieving from a data storage accessible by the service information on at least one data connection type to the system; d) establishing a connection from the service with the assigned virtual network address to the system over the at least one data connection type; e) initiating a system management application of the system in the service on the basis of the at least one data connection type; and f) attaching the initiated system management application of the system to the established connection in the service in order to provide the system connection.

The session may be established through execution of a service application in the server.

The system management application may be initiated in the server in response to either one of the following: the establishment of connection, receipt of control signal from the client device.

The method may further comprise: generating, in the service, a service log of at least one of the following: the provision of the system connection, one or more operations during the system connection.

According to a second aspect, a server for providing a system connection for a client device to at least one system among a plurality of systems in a computer network is provided, wherein the server comprising at least one processor, and at least one memory storing at least one portion of computer program code, and wherein the processor being configured to cause the server at least to perform: a) receive access credentials from the client device in order to establish a session in a service; b) establish the session in the service at least by assigning a virtual network address for the session in response to a legitimate access credentials; c) receive an indication from the client device into which system the client device intends to access; d) retrieve from a data storage accessible by the service information on at least one data connection type to the system; d) establish a connection from the service with the assigned virtual network address to the system over the at least one data connection type; e) initiate a system management application of the system in the service on the basis of the at least one data connection type; and f) attach the initiated system management application of the system to the established connection in the service in order to provide the system management connection.

The server may also be configured to execute a service application in the server during the session.

The server may be configured to initiate the system management application in response to either one of the following: the establishment of connection, receipt of control signal from the client device.

The server may further be configured to generate, in the service, a service log of at least one of the following: the provision of the system connection, one or more operations during the system connection.

According to a third aspect, a management system for providing a system connection for a client device to at least one system among a plurality of systems is provided wherein the management system comprises at least a server, data storage, and at least one system, wherein the management system is configured to perform the method as of above.

The management system may be communicatively coupled to at least one other management system through the servers in each of the management systems, and wherein the client device is configured to access the other management system through the management system.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 illustrates schematically an environment of the present invention.
Figure 2 illustrates an example of a method according to the invention.
Figure 3 illustrates as an example some aspects relating to an establishment of a session according to the invention.
Figure 4 illustrates as an example some aspects relating to an establishment of a system management connection according to the invention.
Figure 5 illustrates schematically a server according to an example of the invention.
Figure 6 illustrates schematically a management system implementation according to an example of the present invention.

### DESCRIPTION OF SOME EMBODIMENTS

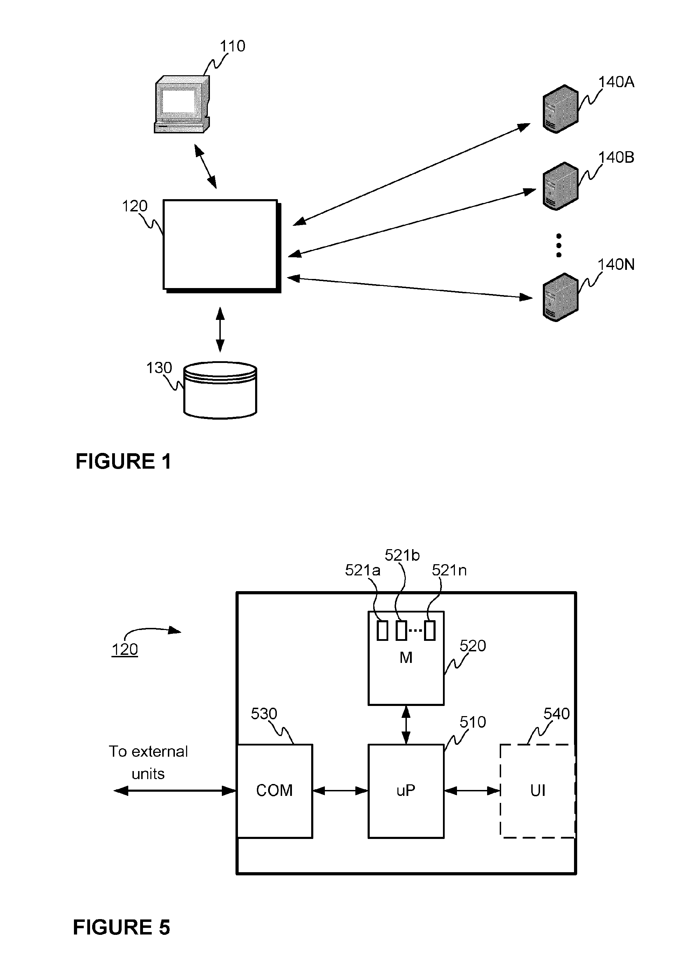

Figure 1 illustrates schematically an environment of the present invention, wherein an operator, such as IT person, is willing to manage a system 140A-140N accessible over a network through a client device 110, such as a workstation. The system 140A-140N refers to, but is not limited to, a solution performing a certain task within an environment into which the solution is implemented. According to an example of the present invention the client device 110 is configured to access a server 120, or similar entity, which provides tools, as will be described, for accessing one or more system 140A-140N through a centralized solution provided by the server. Furthermore, the server 120 may be provided with an access to data storage 130, such as a database, which may e.g. store client related information, which may be retrieved as will be discussed.

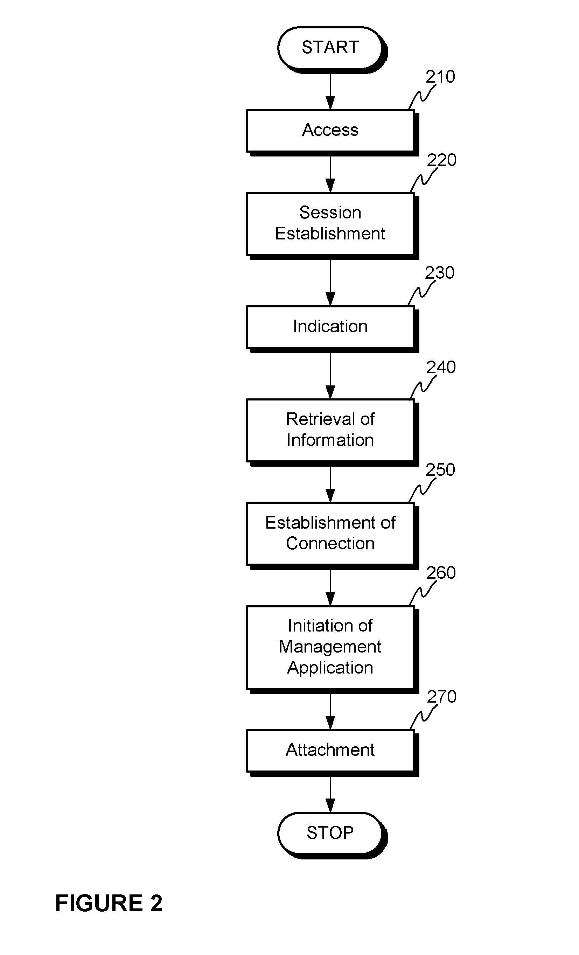

Figure 2 illustrates an example of a method according to the invention, wherein the method provides a system connection for a client device 110 to at least one system 140A-140N within a plurality of systems 140A-140N in a computer network. The system 140A-140N may e.g. be a vendor specific in a sense that the management arrangement requires a specific application in order to manage the system in question.

In step 210, the operator, i.e. the user, initiates accessing a service implemented in a server 120 with a client device 110. The implementation of the service in the server refers to, but is not limited to, an execution of a service application in the server. The service application may e.g. be such that it establishes a secure virtual working environment for the operator in the server though the client device. The access may e.g. be initiated by delivering an access request to a network address over a communication network, such as Internet. The server 120 is configured to respond in a predetermined manner. For example, the server 120 may be configured to request access credentials for identifying the operator, i.e. the user. If the operator provides such access credentials (authenticated by the server, for example), which allow access to the service, the server 120 is configured to establish a session 220 within the service for the operator. In other words, the server 120 is configured to initiate a service with a service application executed by the server 120. In some implementation the server 120 may be configured to deliver a client application to the client device and by installing the client application the operator may access the service. As the access to the service provides an interface for the operator to access system management solutions, the server is configured to retrieve, on the basis of the credentials, information on systems into which the operator is entitled to access. For example, the server may be configured to give a list on the systems allowed to be managed by the operator in question. Alternatively or in addition, the server may be configured to display icons on system management applications available for the operator. The access rights may be defined an operator basis in data storage accessible by the server 120. Furthermore, the establishment of the session 220 causes the server 120 to assign a network address for the session, which may e.g. be selected from an address pool maintained in the server or in any other entity accessible by the server 120. For sake of clarity the service running on the server may e.g. be a solution, which provides a virtual session environment for the operator in the server by means of which the operator may utilize system management solutions available in the service session.

During the session the operator may indicate with his/her client device in a known manner into which system the operator intends to access. The indication may e.g. be given with a control signal given with an input device communicatively coupled to the client device 110 from which the indication is delivered to the service executed in the server 120. In response to a receipt of the indication the service is configured to retrieve information 240 relating to the system from data storage. The information comprises, but is not limited to, at least information on at least one connection type for accessing the system indicated by the operator. The connection type may refer to IP connection or MSISDN connection, but is not limited to these only. The data storage may also maintain and store information on a network address with respect to the connection type among other things.

In order to manage the system indicated by the operator a connection is established 250 from the service executed in the server to the system over the at least one data connection type retrieved from the data storage.

Further, a system management application is initiated in the server 260, which may be at least partly controlled by the operator through the established session. The system management application may be initiated either automatically in response to the connection establishment 250 or manual instruction from the operator of the client device, which causes a control signal from the client device towards the server. The assigned virtual network address, e.g. the selected IP address from the address pool, is used in the initiation of the system management application so that the application is represented towards the network with the virtual network address.

Finally, the server is configured to attach the initiated system management application to the established connection so that the operator may give control instructions in the system management application and the control instructions are delivered to the system over the connection.

According to an embodiment of the invention a service log of at least one of the following: the provision of the system connection, one or more operations during the system connection, may be generated in the service. Advantageously, the service log is configured to be stored either in the server 120 or the system entity 140A-140N or both. The items to be stored in the log may e.g. be an event in question, user ID, time of the event and so on.

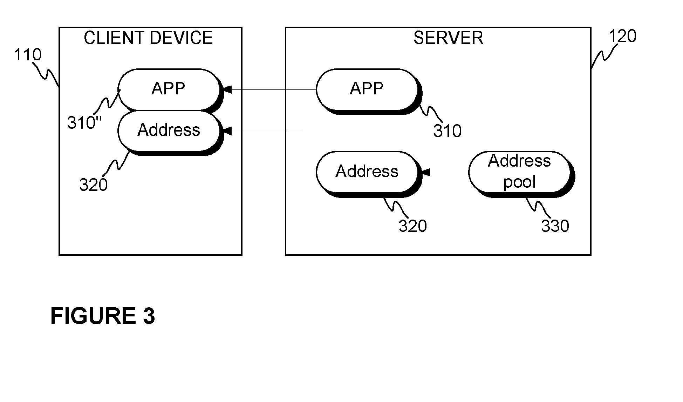

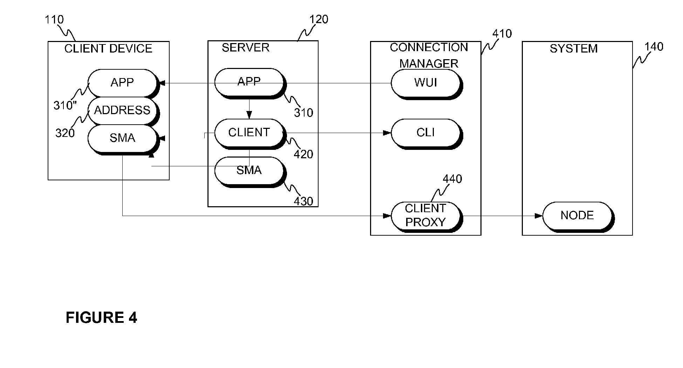

In order to describe the invention in more detail the Figures 3 and 4 are provided. Figure 3 schematically discloses how the client device and the server establish the session and how network address may be assigned to the session. In response to a legitimate access credentials the server 120 is configured to initiate a service with a service application 310 executed by the server 120. The service application 310 may e.g. be a web browser. The service application is displayed in a desktop of the client device 110. This is referred with 310" in Figure 3. Further, as already described, a network address 320, such as virtual IP address, is provided for the session by e.g. fetching it from a pool of network addresses 330 maintained in the server 120. The network addresses in the pool are advantageously assigned to the server 120 in a known manner. The address is assigned to the client device 110 so that the network address, e.g. an IP address, is used in the session, when the service application implements communication between the client device 110 and the server 120 over the service application 310, 310".

Figure 4, in turn, illustrates schematically the establishment of a system management connection from the client device 110 to a system 140. In the example of the invention a further element is provided. Namely, in the solution as depicted in the Figure 4 a connection manager is involved, which may be configured to manage and maintain system related information, such as network addresses. The connection manager may be executed in another server or in the server 120. As described the operator of the client device 110 selects the system he/she wants to manage over the service application and in response to the selection the connection manager 410 (WUI) is configured to provide a network address, such as URL, to the server 120. The network address comprises information on the network location, wherein application software for managing the system 140 locates. The server 120 may, in response to the receipt of the network address, initiate internal client software 420, which is arranged to manage the management session. The client software 420 may be configured to retrieve management parameters, such as management rights, from the connection manager 410 (CLI). Further, the internal client software 420 is configured to initiate an execution of a system management application (SMA) 430 in the server, which is also seen in the client device 110. The system management application is configured so that it also initiates a session, such as SSH session, toward the connection manager by means of a client proxy 440 executed by the connection manager 410. The client proxy forwards the session to the system 140, and thus attaching the initiated system management application of the system to the established connection in the service in order to provide the system management connection for the operator.

In the context of the description relating to the Figures 3 and 4 it is directly assumed that an access to the server is granted the client device, i.e. the operator of the client device. As already discussed the access is advantageously provided in response to a provision of legitimate access credentials. The legitimateness of the access credentials may be checked, as described, against data stored in the data storage 130. An administrator maintains and updates the data stored in the data storage. The maintenance and update of the data comprises, but is not limited to, adding new access credentials with specific access rights, modifying the existing access credentials and/or deleting access the existing access credentials. As disclosed, the server 120 and the data storage are operatively and communicatively coupled to each other so that exchange of information and thus the checking of legitimateness of access credentials may be achieved.

Figure 5 illustrates schematically a server 120 according to an example of the invention. The server 120 is configured to implement the method as described. The implementation of the method may be achieved by arranging the processor 510 to execute at least some portion of computer program code 521 a-521 n stored in the memory 520 causing the processor 510, and thus the server 120, to implement one or more method steps as described. The processor 510 is thus arranged to access the memory 520 and retrieve and store any information therefrom and thereto. Moreover, the processor 510 is configured to control the communication through the communication interface 530 with any external unit, such as with data storage 130, at least one system to be managed 140A-140N and at least one client device 110. The processor 510 may also be configured to control the output of information, i.e. data. The processor 510 may also be configured to control storing of obtained and determined information. For sake of clarity, the processor herein refers to any unit suitable for processing information and control the operation of the apparatus, among other tasks. The mentioned operations may e.g. be implemented with a microcontroller solution with embedded software. Similarly, the invention is not limited to a certain type of memory only, but any memory type suitable for storing the described pieces of information may be applied in the context of the present invention. Even if it is disclosed that the method may be implemented with one server, it may also be arranged that implementation of the method is performed in multiple servers operatively coupled to each other either directly or indirectly.

An example of the invention also relates to a non-transitory computer-readable storage medium, which stores at least portions of computer program code, wherein the portions of computer program code are computer-executable to implement the method steps in a server, or in a system, as described. In general, the computer-readable storage medium may include a storage medium or memory medium, such as magnetic or optical media e.g. disc, DVD/CD-ROM, volatile or non-volatile media, such as RAM. The computer program code may be written in any form of programming language, including compiled or interpreted languages, and the computer program may be deployed in any form, including as a stand-alone program or as a subroutine, element or other unit suitable for use in a computing environment. A computer program code may be deployed to be executed on one server or on multiple servers at one site or distributed across multiple sites and interconnected by a communication network. This definition comprises also any solutions based on so called cloud computing. The computer program code comprises instructions for causing the server to perform one or more of the method steps as described above. Moreover, the invention also relates to a system, which comprises at least one client device, at least one server and at least one system to be configured. The mentioned elements comprise necessary means and computer program code, which establish when the computer program code is executed in the mentioned entities of the system, an operating environment wherein the method as described may be implemented.

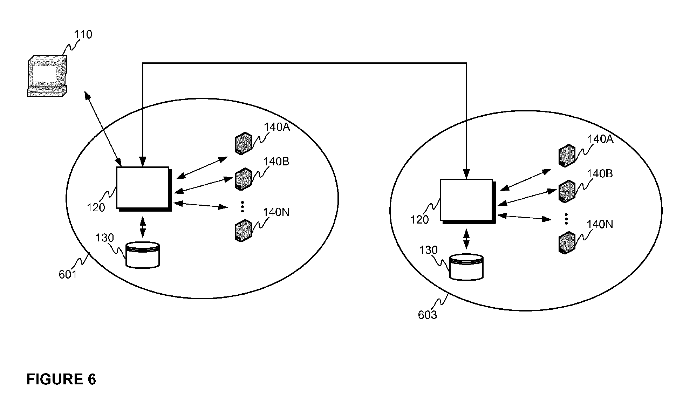

Further, the invention relates to a management system comprising a server 120, data storage 130 and at least one system 140A-140N into which a connection is to be established from the client device 110. Figure 6 illustrates a further example according to the invention, wherein each such management system may be considered as a management sub-system 601, 603, which are communicatively coupled to each other. The sub-systems may e.g. locate in different countries and being such in nature that the client device 110 cannot, or is not allowed to, access directly to both these sub-systems. Let us assume that in case as depicted in Figure 6 the client device has access to the sub-system 601, but cannot directly access to the sub-system 603. The present invention may be implemented so that the sub-systems are allowed to interact. More specifically, a communication connection, which is e.g. secure, may be implemented between the servers in each sub-system 601, 603. The first sub-system is configured to perform all security related operations to the client device 110 and to establish the session. As a result, the client device 110 may manage at least one system in the sub-system 603.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A method for providing a system connection for a client device to at least one system among a plurality of systems in a computer network, **characterized in that** the method comprising:
a) receiving (210) access credentials from the client device in order to establish a session in a service,
b) establishing (220) the session in the service at least by assigning a virtual network address for the session in response to a legitimate access credentials,
c) receiving an indication (230) from the client device into which system the client device intends to access,
d) retrieving (240) from a data storage accessible by the service information on at least one data connection type to the system,
d) establishing (250) a connection from the service with the assigned virtual network address to the system over the at least one data connection type,
e) initiating (260) a system management application of the system in the service on the basis of the at least one data connection type, and
f) attaching (270) the initiated system management application of the system to the established connection in the service in order to provide the system connection.

2. The method of claim 1, wherein the session is further established through execution of a service application in the server (120).

3. The method of claim 1, wherein the system management application is initiated in the server in response to either one of the following: the establishment of connection, receipt of control signal from the client device.

4. The method of any of the preceding claims, wherein the method further comprising:
generating, in the service, a service log of at least one of the following: the provision of the system connection, one or more operations during the system connection.

5. A server (120) for providing a system connection for a client device (110) to at least one system (140A-140N) among a plurality of systems (140A-140N) in a computer network, the server (120) comprising
- at least one processor (510), and
- at least one memory (520) storing at least one portion of computer program code (521 a-521 n),
**characterized in that** the processor (510) being configured to cause the server (120) at least to perform:
a) receive (210) access credentials from the client device in order to establish a session in a service,
b) establish (220) the session in the service at least by assigning a virtual network address for the session in response to a legitimate access credentials,
c) receive an indication (230) from the client device into which system the client device intends to access,
d) retrieve (240) from a data storage accessible by the service information on at least one data connection type to the system,
d) establish (250) a connection from the service with the assigned virtual network address to the system over the at least one data connection type,
e) initiate (260) a system management application of the system in the service on the basis of the at least one data connection type, and
f) attach (270) the initiated system management application of the system to the established connection in the service in order to provide the system management connection.

6. The server (120) of claim 5, wherein the server is configured to execute a service application in the server (120) during the session.

7. The server (120) of claim 5, wherein the server is configured to initiate the system management application in response to either one of the following:
the establishment of connection, receipt of control signal from the client device.

8. The server (120) of any of the claims 5-7, wherein the server is further configured to:
generate, in the service, a service log of at least one of the following: the provision of the system connection, one or more operations during the system connection.

9. A management system (601) for providing a system connection for a client device (110) to at least one system (140A-140N) among a plurality of systems (140A-140N) **characterized in that** the management system comprises at least
- a server (120),
- data storage (130), and
- at least one system (140A-140N),
wherein the management system is configured to perform the method of claims 1-4.

10. The management system (601) of claim 9, wherein the management system (601) is communicatively coupled to at least one other management system (603) through the servers (120) in each of the management systems (601, 603), and wherein the client device (110) is configured to access the other management system (603) through the management system (601).
